# EUROPÄISCHE PATENTSCHRIFT

(11) **EP 0 318 022 B1**
(45) Veröffentlichungstag und Bekanntmachung des Hinweises auf die Patenterteilung: **19.01.1994**
(21) Anmeldenummer: 88119644.8
(22) Anmeldetag: 25.11.1988
(51) Int. Cl.: C09B 67/10, C09B 3/18, C09B 67/04, C09D 7/00

(54) **Verfahren zur Herstellung von N,N'-Dimethyl-perylen-3,4,9,10-tetracarbonsäurediimid in hochdeckender Pigmentform**
Process for the manufacture of N,N'-dimethyl-perylene-3,4,9,10-tetracarboxylic-acid diimide in a highly covering pigmentary form
Procédé de fabrication de dimide de l'acide N,N'-diméthyl-pérylène-3,4,9,10-tétracarboxylique sous une forme pigmentaire fortement couvrante

(30) Priorität: 27.11.1987 DE 3740280
(43) Veröffentlichungstag der Anmeldung: 31.05.1989
(73) Patentinhaber: HOECHST AKTIENGESELLSCHAFT, 65926 Frankfurt am Main (DE)
(72) Erfinder: Dietz, Erwin, Dr., D-6233 Kelkheim (Taunus) (DE); Urban, Manfred, D-6200 Wiesbaden (DE)

(56) Entgegenhaltungen:
- EP-A- 0 208 266
- DE-A- 2 153 087
- DE-A- 2 635 157
- DE-B- 1 115 711

## Beschreibung

Die Erfindung betrifft das technische Gebiet der hochdeckenden Pigmente zum Pigmentieren hochmolekularer Materialien.

Bei der Pigmentierung von Industrielacken, insbesondere Automobildecklacken werden Pigmente benötigt, die bei hoher Deckkraft und reinem Farbton hochglänzende Lackierungen ergeben. Um Lacke mit roten Unitönen herzustellen, werden in der Praxis häufig Kombinationen aus anorganischen Pigmenten beispielsweise Eisenoxid-Pigmenten, und deckenden organischen Rot-Pigmenten benutzt. Aus wirtschaftlichen und koloristischen Gründen sind organische Pigmente mit höchster Deckkraft bei möglichst geringer Schichtdicke des Lackes, bei gleichzeitig hervorragenden rheologischen Eigenschaften und möglichst reinem Farbton von besonderem Interesse. Weiterhin werden sehr gute Echtheiten, insbesondere Wetterechtheit, angestrebt.

N,N′-Dimethylperylen-3,4,9,10-tetracarbonsäurediimid (DMP) wird als organisches Rotpigment (C.I. Pigment Red 179, C.I. Nr. 71130) seit langem verwendet, wobei sowohl transparente als auch deckende Formen des Pigments bekannt sind.

Die DE-B-21 53 087 (GB-A-1 370 433) beschreibt die Umsetzung von Perylen-3,4,9,10-tetracarbonsäuredianhydrid mit Methylamin bei 120 bis 150°C, wobei unter Anwendung hoher Konzentrationen des Dianhydrids gearbeitet wird. Die bei der Kondensation erhaltenen DMP-Rohpigmente werden isoliert, getrocknet und danach durch eine intensive Mahl- und Knetoperation mit anschließendem erneutem Trocknen in die fertige Pigmentform überführt. Nach jeder Verfahrensstufe wird das Pigment isoliert, weshalb große Mengen an Abwasser entstehen. Das Verfahren liefert jedoch kein deckendes DMP-Pigment, sondern ein Pigment in transparenter Form mit einer Teilchengröße von weniger als 0,1 µm. Auch mit einem zusätzlichen Lösungsmittelfinish des Rohpigments, das nach der Synthese anfällt, erhält man das Pigment in einer Form, die hinsichtlich Deckkraft, Glanz und Farbtonreinheit zu wünschen übrig läßt.

Aus der EP-A-0 208 266 ist die Herstellung eines deckenden DMP-Pigments bekannt, wobei in diesem Verfahren feinteiliges, trockenes DMP-Rohpigment mit einer Teilchengröße von weniger als 0,04 µm verwendet wird. Das Rohpigment wird in Gegenwart eines flüssigen organischen Lösungsmittels in einer Mühle oder einem Dispergator einem rekristallisierenden Mahlprozeß unterworfen und anschließend das DMP-Pigment isoliert und getrocknet. Das Verfahren ist jedoch wegen vieler Arbeitsschritte und der nötigen Lösungsmittelmengen aufwendig und kostenintensiv. So muß das einzusetzende Feinteilige Rohpigment zunächst synthetisiert, isoliert, getrocknet und pulverisiert werden. Bei der anschließenden Mahlung in Gegenwart von Lösungsmitteln werden erhebliche Mengen an organischen Lösungsmitteln eingesetzt, die wieder regeneriert werden müssen. Außerdem fallen große Mengen Abwasser an, da nach jeder Verfahrensstufe isoliert werden muß. Es wurde nun gefunden, daß man hochdeckende DMP-Pigmente mit vergleichbar günstigen Eigenschaften in einfacher und ökologisch einwandfreier Weise herstellen kann.

Gegenstand der Erfindung ist ein Verfahren zur Herstellung von N,N′-Dimethyl-perylen-3,4,9,10-tetracarbonsäurediimid in hochdeckender Pigmentform unter Anwendung der Reaktion von Perylen-3,4,9,10-tetracarbonsäuredianhydrid mit Methylamin, dadurch gekennzeichnet, daß man pro Mol Perylen-3,4,9,10-tetracarbonsäuredianhydrid die mindestens 3-molare Menge Methylamin in der mindestens 5-fachen, vorzugsweise 5- bis 15-fachen, insbesondere 8- bis 12-fachen, Gewichtsmenge Wasser, bezogen auf das Gewicht des Dianhydrids, einsetzt, die Reaktion bei einer Temperatur von 40 bis 200°C durchführt und überschüssiges Methylamin frühestens nach Abreagieren des eingesetzten Perylen-3,4,9,10-tetracarbonsäuredianhydrids zu Methylammoniumsalzen der entsprechenden N,N′-Dimethyldicarbamoylperylendicarbonsäuren abdestilliert, wobei die Temperatur nach und gegebenenfalls schon bei dem Entstehen des N,N′-Dimethylperylen-3,4,9,10-tetracarbonsäurediimids zur Bildung einer hochkristallinen Pigmentform für einige Zeit bei 140 bis 200°C eingestellt wird, anschließend das erhaltene wäßrig-suspendierte hochkristalline Rohpigment, das eine mittlere Teilchengröße D_{50%} (Massenverteilung) von 0,15 bis 0,4 µm und ein mittleres Verhältnis _{50%} (Massenverteilung) von Länge zu Breite der Pigmentteilchen von 10:1 bis 3:1, insbesondere von 7:1 bis 3,5:1 besitzt, nach Zwischenisolierung oder vorzugsweise ohne Zwischenisolierung in wäßriger Suspension mahlt, bis die mittlere Teilchengröße von 0,1 bis 0,2 µm und das mittlere Verhältnis von Länge zu Breite der Pigmentteilchen weniger als 5:1, insbesondere 4:1 oder weniger, beträgt, und das erhaltene Präpigment, vorzugsweise ohne Zwischenisolierung, in wäßriger Suspension oder nach Zusatz eines organischen Lösungsmittels in wäßrig-organischem Medium thermisch behandelt, bis das Pigment eine mittlere Teilchengröße von 0,125 bis 0,4 µm und ein mittleres Verhältnis von Länge zu Breite der Pigmentteilchen von 4:1 oder weniger aufweist.

Die vorstehend definierten mittleren Teilchengrößen und mittleren Verhältnisse von Länge und Breite der Pigmentteilchen beziehen sich auf eine Mittelwertbildung nach der Massenverteilung.

Das im erfindungsgemäßen Verfahren einzusetzende Perylen-3,4,9,10-tetracarbonsäuredianhydrid muß einen gewissen Reinheitsgrad aufweisen, wenn hervorragende Pigmentqualitäten erreicht werden sollen. Vorzugsweise wird Perylen-3,4,9,10-tetracarbonsäuredianhydrid eingesetzt, das nach dem Verfahren der Deutschen Offenlegungsschrift Nr. 35 20 807 (US-A-4,650,879) hergestellt worden ist. Hierbei wird Tetrakaliumsalz der Perylen-3,4,9,10-tetracarbonsäure mit Aktivkohle und Eisen(III)-hydroxid gereinigt. Nach Ansäuern und Filtrieren erhält man Perylen-3,4,9,10-tetracarbonsäuredianhydrid in einer Form, die für das erfindungsgemäße Verfahren geeignet ist.

Vorzugsweise wird das erfindungsgemäße Verfahren unter Verwendung der 5- bis 15-fachen Gewichtsmenge Wasser bei 140 bis 200°C, insbesondere mit der 8- bis 12-fachen Gewichtsmenge Wasser, bezogen auf das Gewicht des Dianhydrids, bei 145 bis 180°C, durchgeführt, das überschüssige Methylamin anschließend abdestilliert, gegebenenfalls mit einer Säure neutralisiert, um unerwünschte Geruchsbildung durch Spuren von Monomethylamin zu unterbinden, und das wäßrig-suspendierte Rohpigment ohen Zwischenisolierung dem darauffolgenden Mahlprozeß zugeführt.

Das abdestillierte Methylamin kann wieder für die nächste Kondensationsreaktion eingesetzt werden. Obwohl es vorteilhaft ist, alles überschüssige Methylamin vor dem Mahlprozeß zu entfernen, kann das Methylamin auch erst später entfernt werden, beispielsweise nach dem Mahlprozeß oder erst bei der Isolierung des Pigments.

Eine besonders bevorzugte Verfahrensvariante ist dadurch gekennzeichnet, daß man die Reaktion mit dem Methylamin unter Ringöffnung der Anhydridgruppen bei Siedetemperatur der Suspension unter Normaldruck durchführt, danach das überschüssige Methylamin abdestilliert, gegebenenfalls mit etwas Säure neutralisiert, und anschließend auf eine Temperatur von 140 bis 200°C, insbesondere 145 bis 180°C, erhitzt und die Kristallisation des Rohpigments und eventuell die Vervollständigung der 2. Reaktionsstufe (Diimidbildung) bei dieser Temperatur durchführt, bis die gewünschte Korngröße und Teilchenform erhalten wird, sowie die Suspension des Rohpigments dem darauffolgenden Mahlprozeß zuführt.

Während der Kristallisation können Lösungsmittel eingesetzt werden, die vor der Mahlung wieder entfernt werden und die die Kristallisation in einer günstigen Weise beeinflussen. Geeignete Lösungsmittel hierfür sind aliphatische Alkohole, aliphatische Ketone, aliphatische Ester, N-alkylierte Carbonsäureamide, aromatische Kohlenwasserstoffe, aromatische Halogenkohlenwasserstoffe und heterocyclische Basen. Bevorzugt sind wasserdampfflüchtige Lösungsmittel.

Für die Mahlung der nach der Kondensationsreaktion erhaltenen Pigmentsuspension eignen sich Dispergatoren und Mühlen, beispielsweise Schwingmühlen, Rollmühlen oder vorzugsweise diskontinuierliche oder kontinuierliche Rührwerkskugelmühlen. Die Mahlung wird in der Regel bei 5 bis 100°C, vorzugsweise 10 bis 50°C, durchgeführt. Als Mahlkörper werden vorlzugsweise Kugeln mit einem Durchmesser von 0,3 - 3 mm aus Quarz, Aluminiumoxid, Zirkonoxid oder Mischoxiden eingesetzt.

Das nach der Mahlung vorliegende DMP-Präpigment wird nunmehr in wäßriger Suspension oder - nach Zusatz von organischem Lösungsmittel - im wäßrig-organischen Medium thermisch behandelt, bis die angegebene Teilchengröße und Teilchenform erhalten wird. Vorzugsweise wird mindestens ein organisches Lösungsmittel aus der Gruppe, bestehend aus halogenierten, insbesondere chlorierten oder bromierten aromatischen Kohlenwasserstoffen, wie Chlorbenzol, Dichlorbenzolen, wie o-Dichlorbenzol, 1,2,4-Trichlorbenzol oder Brombenzol, halogenierten, insbesondere chlorierten und bromierten aliphatischen Kohlenwasserstoffen, wie C₁-C₁₂-Chloralkanen oder C₁-C₁₂-Bromalkanen, Alkylbenzolen und Alkylnaphthalinen, vorzugsweise Alkylbenzolen oder -naphthalinen mit 1 bis 3 C₁-C₄-Alkylketten, wie z.B. Toluol, Ethylbenzol, Cumol, Cymol, t-Butyltoluol und o-, m- und p-Xylol sowie Methyl-, Dimethyl-, Isopropyl-und Diisopropylnaphthalinen, zugesetzt und die Pigmentsuspension bei einer Temperatur von 50 bis 200°C für 1 bis 15 Stunden behandelt. Bevorzugte organische Lösungsmittel bei der thermischen Behandlung sind die genannten Alkylbenzole und Alkylnaphthaline, insbesondere o-, m- oder p-Xylol sowie Ethylbenzol. Die Lösungsmittelmenge kann in weiten Grenzen variieren und beträgt in der Regel weniger als die doppelte Menge Lösungsmittel bezogen auf das Gewicht des Präpigments. Bevorzugt verwendet man etwa die gleiche Gewichtsmenge Lösungsmittel wie DMP-Präpigment. Die Behandlung in dem wäßrig-organischen Medium wird vorzugsweise für 0,5 bis 6 Stunden bei 80 bis 180°C, vorzugsweise 100-150°C, durchgeführt.

Zur Verbesserung einzelner anwendungstechnischer Eigenschaften ist es möglich, aber nicht erforderlich, vor, während oder nach der Kondensation, vor, während oder nach der Mahlung oder vor, während oder nach dem Finish oberflächenaktive Substanzen zuzusetzen. Als oberflächenaktive Substanzen kommen kationaktive, anionaktive und nichtionogene Tenside, in Frage. Derartig präparierte Pigmente werden bevorzugt in wäßrigen Lacksystemen eingesetzt. Für lösungsmittelhaltige Lacksysteme werden die Pigmente vorzugsweise nicht mit oberflächenaktiven Substanzen eingesetzt.

Die nach der Synthese anfallenden DMP-Rohpigmente sowie die nach der Mahlung anfallenden DMP-Präpigmente können selbstverständlich isoliert und getrennt aufgearbeitet werden. Dies ist aber nicht erforderlich. Bevorzugt ist das erfindungsgemäße Verfahren ohne jegliche Zwischenisolierungen.

Die erfindungsgemäß hergestellten Pigmente eignen sich besonders zum Pigmentieren von hochmolekularen natürlichen oder synthetischen organischen Materialien, wie beispielsweise Celluloseether und -ester, wie Ethylcellulose, Nitrocellulose, Celluloseacetat, Cellulosebutyrat, natürliche Harze oder Kunstharze, wie Polymerisationsharze oder Kondensationsharze, z.B. Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen. Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß zu verwendenden Pigmente als Toner oder in Form von Präparationen oder Dispersionen einzusetzen. Bezogen auf das zu pigmentierende hochmolekulare organische Material setzt man die erfindungsgemäß hergestellten Pigmente in einer Menge von vorzugsweise 0,1 bis 10 Gew.-% ein.

Mit den nach dem erfindungsgemäßen Verfahren hergestellten DMP-Pigmenten können insbesondere Automobildecklacke pigmentiert werden. Die technisch gängigen Automobillacke sind Einbrennlacke aus der Klasse der Alkyd-Melamin-Harzlacke und Acryl-Melamin-Harzlacke sowie Zweikomponentenlacke auf Basis polyisocyanatvernetzbarer Acrylharze.
Mit den nach dem erfindungsgemäßen Verfahren hergestellten DMP-Pigmenten werden nach der Einarbeitung hochdeckende, rote, reine, helle und glänzende Lackierungen mit sehr guter Überlackierechtheit und Wetterechtheit erhalten.

Die hergestellten Pigmente besitzen außerdem sehr gutes Fließverhalten bei hoher Pigmentkonzentration und eine hervorragende Flockungsstabilität. Durch die Kombination mit anorganischen Pigmenten, wie Eisenoxid-Pigmenten, lassen sich klare, rote Farbtöne einstellen. Die erfindungsgemäß hergestellten Pigmente zeigen im Lack bei höchster Deckkraft kein Broncieren.

In den folgenden Beispielen beziehen sich Teile auf das Gewicht.

### Beispiel 1

100 Teile Perylen-3,4,9,10-tetracarbonsäuredianhydrid werden in Form eines feuchten Preßkuchens (217,8 Teile), hergestellt nach dem Verfahren der deutschen Offenlegungsschrift Nr. 35 20 807, mit 882,2 Teilen Wasser versetzt und 1 Stunde bei 25°C gerührt. Nach Zugabe von 244,2 Teilen 27,3 %iger wäßriger Monomethylaminlösung (entsprechend 66,67 Teilen Monomethylamin) wird 2 Stunden lang zum Sieden erhitzt. Anschließend läßt man das Monomethylamin bis zu einer Übergangstemperatur von 100°C abdestillieren. Die Suspension wird nun 5 Stunden auf 160°C erhitzt und nach dem Abkühlen auf 25°C mit 98 %iger Ameinsensäure auf pH 7 - 7,5 eingestellt. Das erhaltene Rohpigment besitzt eine mittlere Teilchengröße von 0,17 µm und ein mittleres Verhältnis von Länge zu Breite der Pigmentteilchen von 5,3:1. Die Rohpigmentsuspension wird danach in einer Rührwerkskugelmühle mit Quarzperlen (1 mm Durchmesser) 1 Stunde bei 20 - 30°C gemahlen. In der Regel ist es erforderlich, während der Mahlung geringe Mengen an Wasser zuzusetzen, um die optimalen Mahlbedingungen aufrechtzuerhalten. Nach dem Mahlen besitzt das Präpigment eine mittlere Teilchengröße von 0,113 µm und ein mittleres Verhältnis von Länge zu Breite der Pigmentteilchen von 3,5:1 Nachdem die Quarzperlen durch Sieben von der Präpigmentsuspension entfernt worden sind, werden 1225 Teile der Präpigmentsuspension mit 106,6 Teilen Xylol versetzt und 5 Stunden zum Sieden erhitzt. Das Xylol wird anschließend mit Wasserdampf bis zu einer Übergangstemperatur von 100°C abdestilliert. Nach Absaugen, Waschen und Trocknen bei 80°C erhält man 104 Teile Pigment, das eine mittlere Teilchengröße von 0,151 µm und ein mittleres Verhältnis von Länge zu Breite der Pigmentteilchen von 3,9:1 besitzt. Nach Einarbeitung in handelsübliche Automobildecklacke, erhält man hochdeckende, rote, glänzende und reine Färbungen.

Zur Bestimmung der Teilchengröße und der Teilchenform werden die jeweils anfallenden Pigmentpartikel im Diethyläther dispergiert und in einem Ultraschallfeld hoher Intensität auf ein Präparatträgernetz aufgenebelt. Die Auswertung erfolgt anhand transmissionselektronenmikroskopischer Aufnahmen der aufgenebelten Pigmentteilchen.
a) Bestimmung der Teilchengröße:
   Anhand der transmissionselektronenmikroskopischen Aufnahmen wurde der Umfang eines jeden auszuwertenden abgebildeten Teilchens manuell umfahren und daraus unter Verwendung eines graphischen Tabletts und eines Rechners die zugehörige Projektionsfläche und die zugehörige Teilchengröße D (Durchmesser des flächengleichen Kreises) berechnet. Die Anzahl aller Teilchen in abhängigkeit von ihrer Teilchengröße ergibt die Anzahlverteilung, woraus die normierte Massenverteilung und insbesondere der zugehörige Mittelwert D_{50%} der Teilchengröße berechnet werden können (50 % der Gesamtmasse des Pigments gehört zu Teilchen, die kleiner als D_{50%} sind).
b) Bestimmung der Teilchenform:
   Zu diesem Zweck wurde unter Verwendung des graphischen Tabletts die Länge 1 in Längsrichtung der Teilchen, die Breite b senkrecht dazu in der Mitte der Teilchen gemessen und das Verhältnis q von Länge zu Breite für jedes einzelne Teilchen berechnet. Die Häufigkeiten hᵢ dieser Verhältnisse qᵢ wurden in Abhängigkeit von der Größe der qᵢ summiert und der zugehörige Mittelwert q_{50%} der Massenverteilung berechnet.

### Beispiel 2

Eine Rohpigmentsuspension wird zunächst entsprechend Beispiel 1 hergestellt, wobei in diesem Versuch das Rohpigment eine mittlere Teilchengröße von 0,167 µm und ein mittleres Verhältnis von Länge zu Breite der Pigmentteilchen von 5,9:1 besitzt. Die Rohpigmentsuspension wird danach in einer kontinuierlichen Rührwerkskugelmühle, die mit Quarzperlen von 1 mm Durchmesser gefüllt ist, in 4 Passagen bei 20 - 30°C gemahlen. Während der Mahlung werden von Zeit zu Zeit geringe Mengen Wasser zugesetzt, um optimale Mahlbedingungen aufrechtzuerhalten. Das erhaltene Präpigment besitzt eine mittlere Teilchengröße von 0,107 µm und ein mittleres Verhältnis von Länge zu Breite der Pigmentteilchen von 3,6:1. 1225 Teile der erhaltenen Präpigmentsuspension werden mit 106,6 Teilen Xylol versetzt und 5 Stunden zum Sieden erhitzt. Anschließend wird das Xylol mit Wasserdampf abdestilliert, bis eine Übergangstemperatur von 100°C erreicht ist. Danach saugt man das Pigment ab, wäscht es mit Wasser und trocknet bei 80°C. Man erhält 105,6 Teile Pigment, das eine mittlere Teilchengröße von 0,141 µm und ein mittleres Verhältnis von Länge zu Breite der Pigmentteilchen von 2,8:1 besitzt.

Dispergiert man das erhaltene Pigment in einem Alkyd-Melamin-Harz-Automobildecklack in einer Konzentration von 21 %, so erhält man ein sehr gut fließfähiges Mahlgut, das anschließend mit unpigmentiertem Lack auf einen Pigmentgehalt von 7 % eingestellt wird. Der so hergestellte, verarbeitungsfähige 7 %ige Lack besitzt eine niedrige Viskosität und liefert glänzende, hochdeckende, nicht flockende, reine, helle und rote Lackierungen, die bereits bei einer Schichtdicke von 75 µm voll deckend sind.

Bei der Einarbeitung in ein handelsübliches Weichpolyvinylchlorid erhält man eine farbstarke Ausfärbung mit guter Dispergierbarkeit und einwandfreier Ausblutechtheit.

Dispergiert man das Pigment in einer handelsüblichen Nitrocellulosedruckfarbe, so erhält man nach der Applikation glänzende, farbstarke Drucke.

### Beispiel 3

217,8 Teile eines feuchten Preßkuchens von Perylen-3,4,9,10-tetracarbonsäuredianhydrid (entsprechend 100 Teile trockenes Dianhydrid), hergestellt nach DE-A-35 20 807, werden mit 882,2 Teilen Wasser versetzt und 1 Stunde bei 25°C gerührt. Danach werden 86,9 Teile 27,3 %iger wäßriger Monomethylaminlösung zugegeben und 5 Stunden auf 160°C erhitzt. Nach Abkühlen auf 80°C läßt man das überschüssige Monomethylamin abdestillieren, bis eine Übergangstemperatur von 100°C bei Normaldruck erreicht wird. Die erhaltene Rohpigmentsuspension wird bei 25°C mit 98 %iger Ameisensäure auf pH 7 - 7,5 eingestellt. Das Rohpigment besitzt eine mittlere Teilchengröße von 0,282 µm und ein mittleres Verhältnis von Länge zu Breite der Pigmentteilchen von 4,9:1. Die Rohpigmentsuspension wird danach in einer kontinuierlichen Rührwerkskugelmühle analog Beispiel 2 in 4 Passagen gemahlen. Das erhaltene Präpigment besitzt eine mittlere Teilchengröße von 0,109 µm und ein mittleres Verhältnis von Länge zu Breite der Pigmentteilchen von 3,5:1. 1225 Teile Präpigmentsuspension werden mit 106,6 Teilen Xylol versetzt und 5 Stunden zum Sieden erhitzt. Nach Abdestillieren des Xylols mit Wasserdampf bis zu einer Übergangstemperatur von 100°C bei Normaldruck saugt man ab, wäscht das erhaltene Pigment mit Wasser und trocknet bei 80°C. Man erhält 102,9 Teile Pigment mit einer mittleren Teilchengröße von 0,139 µm und einem Verhältnis von Länge zu Breite der Pigmentteilchen von 3,1:1. Das Pigment eignet sich hervorragend zum Färben von Automobildecklacken in hellen Rottönen.

### Beispiel 4

Man verfährt zunächst wie in Beispiel 1 bis das Monomethylamin abdestilliert ist. Danach erhitzt man 5 Stunden auf 175°C, läßt die Pigmentsuspension abkühlen auf 25°C und stellt mit 98 %iger Ameisensäure auf pH 7 - 7,5 ein. Das erhaltene Rohpigment besitzt eine mittlere Teilchengröße von 0,354 µm und ein mittleres Verhältnis von Länge zu Breite der Pigmentteilchen von 4,6:1. Die Rohpigmentsuspension wird danach in einer kontinuierlichen Rührwerkskugelmühle analog Beispiel 2 in 4 Passagen gemahlen. Das erhaltene Präpigment besitzt eine mittlere Teilchengröße von 0,173 µm und ein mittleres Verhältnis von Länge zu Breite der Pigmentteilchen von 4,0:1. Die Präpigmentsuspension wird nun analog Beispiel 1 mit Xylol behandelt und aufgearbeitet. Man erhält 105,9 Teile Pigment mit einer mittleren Teilchengröße von 0,203 µm und ein mittleres Verhältnis von Länge zu Breite der Pigmentteilchen von 4,0:1. Das Pigment ist hervorragend zum Färben von Automobildecklacken in hellen Rottönen geeignet.

### Beispiel 5

217,8 Teile eines feuchten Preßkuchens von Perylen-3,4,9,10-tetracarbonsäuredianhydrid, entsprechend 100 Teilen Dianhydrid, hergestellt nach DE-A-35 20 807, werden mit 882,2 Teilen Wasser versetzt und 1 Stunde bei 25°C gerührt. Nach Zugabe von 244,2 Teilen 27,3 %iger wäßriger Monomethylaminlösung erhitzt man 2 Stunden auf 175°C und stellt anschließend bei 25°C mit 98 %iger Ameisensäure auf pH 7 - 7,5 ein. Das erhaltene Rohpigment besitzt eine mittlere Teilchengröße von 0,298 µm und ein mittleres Verhältnis von Länge zu Breite der Pigmentteilchen von 5,1:1. Die Rohpigmentsuspension wird danach analog Beispiel 2 gemahlen. Man erhält ein Präpigment mit einer mittleren Teilchengröße von 0,151 µm und ein mittleres Verhältnis von Länge zu Breite der Pigmentteilchen von 3,6:1. Nach einer thermischen Behandlung mit Xylol analog Beispiel 2 erhält man 106,0 Teile Pigment mit einer mittleren Teilchengröße von 0,193 µm und einem mittleren Verhältnis von Länge zu Breite der Pigmentteilchen von 3,9:1 Das Pigment eignet sich hervorragend zum Färben von Automobildecklacken und plastischen Massen in deckenden, hellen Rottönen.

### Beispiel 6

Man verfährt analog Beispiel 1 bis das überschüssige Monomethylamin abdestilliert ist. Danach wird 5 Stunden auf 145°C erhitzt und anschließend die Suspension bei 25°C mit 98 %iger Ameisensäure auf pH 7 - 7,5 eingestellt. Das erhaltene Rohpigment mit einer mittleren Teilchengröße von 0,171 µm und einem mittleren Verhältnis von Länge zu Breite der Pigmentteilchen von 3,8:1 wird ohne Zwischenisolierung analog Beispiel 2 in einer kontinuierlichen Rührwerkskugelmühle in 4 Passagen gemahlen. Das erhaltene Präpigment besitzt eine mittlere Teilchengröße von 0,137 µm und ein mittleres Verhältnis von Länge zu Breite der Pigmentteilchen von 3,4:1. 1225 Teile Präpigmentsuspension werden mit 106,6 Teilen Xylol thermisch analog Beispiel 1 behandelt und aufgearbeitet.
Man erhält 105,3 Teile trockenes Pigment mit einer mittleren Teilchengröße von 0,157 µm und einem mittleren Verhältnis von Länge zu Breite der Pigmentteilchen von 3,4:1. Das Pigment eignet sich hervorragend zum Färben von Automobildecklacken und plastischen Massen in deckenden hellen Rottönen.

### Beispiel 7

Man verfährt analog Beispiel 1 bis das überschüssige Monomethylamin abdestilliert ist. Danach erhitzt man die Reaktionsmischung für 10 Stunden auf 145°C. Nach Einstellen des pH-Wertes auf 7 - 7,5 bis 25°C wird die mittlere Teilchengröße des Rohpigments zu 0,182 µm und das mittlere Verhältnis von Länge zu Breite der Pigmentteilchen zu 3,9:1 bestimmt. Die Rohpigmentsuspension wird anschließend analog Beispiel 2 gemahlen und das gebildete Präpigment mit einer mittleren Teilchengröße von 0,147 µm und einem mittleren Verhältnis von Länge zu Breite der Pigmentteilchen von 3,1:1 analog Beispiel 2 mit Xylol thermisch behandelt und aufgearbeitet. Man erhält 101,7 Teile Pigment mit einer mittleren Teilchengröße von 0,163 µm und einem mittleren Verhältnis von Länge zu Breite der Pigmentteilchen von 3,2:1. Das Pigment eignet sich hervorragend zum Färben von Automobillacken und plastischen Massen in deckenden, hellen Rottönen.

### Beispiel 8

Man verfährt zunächst analog Beispiel 1, erhitzt aber nach der Zugabe der Monomethylaminlösung sofort auf 160°C. Nach 5 Stunden Rühren bei 160°C kühlt man auf 80°C, destilliert das überschüssige Monomethylamin ab, bis eine Übergangstemperatur von 100°C erreicht wird, läßt die Suspension auf 25°C abkühlen und stellt mit 98 %iger Ameisensäure auf pH 7 - 7,5. Das erhaltene Rohpigment mit einer mittleren Teilchengröße von 0,194 µm und einem mittleren Verhältnis von Länge zu Breite der Pigmentteilchen von 5,7:1 wird danach analog Beispiel 2 gemahlen, wobei das erhaltene Präpigment eine mittlere Teilchengröße von 0,135 µm und ein mittleres Verhältnis von Länge zu Breite der Pigmentteilchen von 3,2:1 aufweist. Nach thermischer Behandlung mit Xylol und Aufarbeitung analog Beispiel 2 erhält man 102,8 Teile Pigment mit einer mittleren Teilchengröße von 0,238 µm und einem mittleren Verhältnis von Länge zu Breite der Pigmentteilchen von 3,1:1. Das Pigment eignet sich hervorragend zum Färben von Automobildecklacken und plastischen Massen in deckenden Rottönen.

### Beispiel 9

217,8 Teile eines feuchten Preßkuchens von Perylen-3,4,9,10-tetracarbonsäuredianhydrid (entsprechend 100 Teilen trockenem Dianhydrid), hergestellt nach DE-A-35 20 807, werden mit 882,2 Teilen Wasser versetzt und 1 Stunde bei 25°C gerührt. Danach werden 244,2 Teile 27,3 %iger wäßriger Monomethylaminlösung zugegeben und 2 Stunden unter Normaldruck zum Sieden erhitzt. Anschließend läßt man das Monomethylamin bis zu einer Übergangstemperatur von 100°C bei Normaldruck abdestillieren. Nach Zugabe von 100 Teilen Xylol wird 5 Stunden auf 160°C erhitzt, anschließend auf 90°C abgekühlt und das Xylol mit Wasserdampf bis zu einer Übergangstemperatur von 100°C unter Normaldruck abdestilliert. Die erhaltene Pigmentsuspension läßt man abkühlen und stellt sie bei 25°C mit 98 %iger Ameisensäure auf pH 7 - 7,5 ein. Das erhaltene Rohpigment mit einer Teilchengröße von 0,273 µm und einem mittleren Verhältnis von Länge zu Breite der Pigmentteilchen von 5,8:1 wird nun in einer kontinuierlichen Rührwerkskugelmühle die mit Quarzperlen von 1 mm Durchmesser gefüllt ist, mittels 2 Passagen bei 20 - 30°C gemahlen, wobei von Zeit zu Zeit geringe Mengen Wasser zugesetzt werden, um optimale Mahlbedingungen aufrechtzuerhalten. Nach der Mahlung liegt ein Präpigment vor, das eine mittlere Teilchengröße von 0,162 µm und ein mittleres Verhältnis von Länge zu Breite der Pigmentteilchen von 3,0:1 besitzt. 1225 Teile Präpigmentsuspension werden nun mit 110 Teilen Xylol versetzt und 5 Stunden zum Sieden erhitzt. Anschließend wird das Xylol mit Wasserdampf abdestilliert, bis am Übergang eine Temperatur von 100°C bei Normaldruck erreicht wird. Nach Absaugen, Waschen mit Wasser und Trocknen bei 80°C, erhält man 104,3 Teile Pigment mit einer mittleren Teilchengröße von 0,362 µm und einem mittleren Verhältnis von Länge zu Breite der Pigmentteilchen von 3,5:1. Das Pigment eignet sich hervorragend zum Färben von Automobildecklacken und plastischen Massen in deckenden Rottönen.

### Beispiel 10

Man verfährt analog Beispiel 1, führt jedoch die Mahlung der Rohpigmentsuspension mit einer Rührwerkskugelmühle, die mit Zirkonoxydperlen von 1 bis 1,5 mm Durchmesser gefüllt ist, für eine Stunde bei 20 - 30°C durch. Folgende Pigmentteilchenparameter werden festgestellt:

| | | | | |
|---|---|---|---|---|
| Rohpigment: | D_{50%} | = 0,160 µm, | q_{50%} | = 5,7:1; |
| Präpigment: | " | = 0,12 µm, | " | = 3,3:1; |
| Pigment: | " | = 0,172 µm, | " | = 3,7:1. |

Von dem fertigen Pigment werden 103,2 Teile erhalten, die nach Einarbeitung in Automobildecklacke hochdeckende, rote und reine Färbungen ergeben.

### Beispiel 11

Man verfährt analog Beispiel 2 bis einschließlich der Mahlung zum Präpigment. Anschließend werden 1225 Teile Präpigmentsuspension mit 106,6 Teilen Ethylbenzol versetzt und 5 Stunden zum Sieden erhitzt. Das Ethylbenzol wird danach mit Wasserdampf bei Normaldruck abdestilliert, bis eine Übergangstemperatur von 100°C erreicht wird. Nach Absaugen, Waschen mit Wasser und Trocknen bei 80°C erhält man 102,9 Teile Pigment, das sich hervorragend zum Färben von Automobildecklacken und plastischen Massen eignet. Folgende Pigmentteilchenparameter werden gemessen:

| | | | | |
|---|---|---|---|---|
| Rohpigment: | D_{50%} | = 0,172 µm, | q_{50%} | = 5,9:1; |
| Präpigment: | " | = 0,119 µm, | " | = 3,4:1; |
| Pigment: | " | = 0,149 µm, | " | = 2,6:1. |

### Beispiel 12

Man verfährt analog Beispiel 2 bis einschließlich zur Mahlung des Rohpigments zum Präpigment. Dann werden 1225 Teile Präpigmentsuspension mit 106,6 Teilen Xylol versetzt und 5 Stunden auf 125°C erhitzt. Nach Abkühlen auf 90°C wird das Xylol mit Wasserdampf bei Normaldruck abdestilliert, bis am Übergang eine Temperatur von 100°C erreicht wird. Nach Absaugen, Waschen mit Wasser und Trocknen bei 80°C erhält man ein Pigment, das sich hervorragend zum Färben von Automobildecklacken und plastischen Massen eignet. Folgende Pigmentparameter werden gemessen:

| | | | | |
|---|---|---|---|---|
| Rohpigment: | D_{50%} | = 0,187 µm, | q_{50%} | = 5,4:1; |
| Präpigment: | " | = 0,129 µm, | " | = 3,4:1; |
| Pigment: | " | = 0,140 µm, | " | = 2,8:1. |

## Patentansprüche

1. Verfahren zur Herstellung von N,N′-Dimethyl-perylen-3,4,9,10-tetracarbonsäurediimid in hochdeckender Pigmentform unter Anwendung der Reaktion von Perylen-3,4,9,10-tetracarbonsäuredianhydrid mit Methylamin, dadurch gekennzeichnet, daß man pro Mol Perylen-3,4,9,10-tetracarbonsäuredianhydrid die mindestens 3-molare Menge Methylamin in der mindestens 5-fachen Gewichtsmenge Wasser, bezogen auf das Gewicht des Dianhydrids, einsetzt, die Reaktion bei einer Temperatur von 40 bis 200°C durchführt und überschüssiges Methylamin frühestens nach Abreagieren des eingesetzten Perylen-3,4,9,10-tetracarbonsäuredianhydrids, zu Methylammoniumsalzen der entsprechenden N,N′-Dimethyldicarbamoylperylendicarbonsäuren abdestilliert, wobei die Temperatur nach und gegebenenfalls schon bei dem Entstehen des N,N′-Dimethyl-perylen-3,4,9,10-tetracarbonsäurediimids zur Bildung einer hochkristallinen Pigmentform für einige Zeit bei 140 bis 200°C eingestellt wird, anschließend das erhaltene wäßrig-suspendierte hochkristalline Rohpigment, das eine mittlere Teilchengröße D_{50%} (Massenverteilung) von 0,15 bis 0,4 µm und ein mittleres Verhältnis q_{50%} (Massenverteilung) von Länge zu Breite der Pigmentteilchen zwischen 10:1 bis 3:1 besitzt, nach Zwischenisolierung oder ohne Zwischenisolierung in wäßriger Suspension mahlt, bis die mittlere Teilchengröße von 0,1 bis 0,2 µm und das mittlere Verhältnis von Länge zu Breite der Pigmentteilchen weniger als 5:1 beträgt, und das erhaltene Präpigment in wäßriger Suspension oder nach Zusatz eines organischen Lösungsmittels in wäßrig-organischem Medium thermisch behandelt, bis das Pigment eine mittlere Teilchengröße von 0,125 bis 0,4 µm und ein mittleres Verhältnis von Länge zu Breite der Pigmentteilchen von 4:1 oder weniger aufweist.

2. Verfahren nach Anspruch 1, dadurch gekennzeichnet, daß man pro Mol Perylen-3,4,9,10-tetracarbonsäuredianhydrid die 3 - 8-molare Menge Methylamin einsetzt.

3. Verfahren nach Anspruch 1 oder 2, dadurch gekennzeichnet, daß man das Methylamin mit der höchstens 15-fachen, vorzugsweise mit der 8- bis 12-fachen Gewichtsmenge Wasser, bezogen auf das Gewicht des Perylen-3,4,9,10-tetracarbonsäuredianhydrids einsetzt.

4. Verfahren nach mindestens einem der Ansprüche 1 bis 3, dadurch gekennzeichnet, daß man die gesamte Reaktion mit dem Methylamin bei 140 bis 200°C durchführt, danach das überschüssige Methylamin abdestilliert und das wäßrigsuspendierte Rohpigment ohne Zwischenisolierung dem darauffolgenden Mahlprozeß zuführt.

5. Verfahren nach mindestens einem der Ansprüche 1 bis 3, dadurch gekennzeichnet, daß man die Reaktion mit dem Methylamin unter Ringöffnung der Anhydridgruppen bei Siedetemperatur der Suspension unter Normaldruck durchführt, danach das überschüssige Methylamin abdestilliert, anschließend auf eine Temperatur von 140 bis 200°C erhitzt die Kristallisation des Rohpigments und eventuell Vervollständigung der zweiten Reaktionsstufe (Diimidbildung) bei dieser Temperatur durchführt und das wäßrig-suspendierte Pigment ohne Zwischenisolierung dem Mahlprozeß zuführt.

6. Verfahren nach mindestens einem der Ansprüche 1 bis 5, dadurch gekennzeichnet, daß man das Präpigment nach dem Mahlprozeß nach Zusatz von mindestens einem organischen Lösungsmittel aus der Gruppe bestehend aus halogenierten aromatischen und halogenierten aliphatischen Kohlenwasserstoffen sowie Alkylbenzolen und Alkylnaphthalinen, in wäßrig-organischem Medium bei einer Temperatur von 50 bis 200°C für 1 bis 15 Stunden thermisch behandelt.

7. Verfahren nach Anspruch 6, dadurch gekennzeichnet, daß ein oder mehrere organische Lösungsmittel aus der Gruppe, bestehend aus Alkylbenzolen und Alkylnaphthalinen mit 1 bis 3 C₁-C₄-Alkylketten, verwendet werden.

8. Verfahren nach mindestens einem der Ansprüche 1 bis 7, dadurch gekennzeichnet, daß das Rohpigment, Präpigment und das fertige Pigment folgende Parameter aufweisen:
| | | | | |
|---|---|---|---|---|
| Rohpigment: | D_{50%} | = 0,16 - 0,36 µm; | q_{50%} | = 7:1 - 3,5:1 |
| Präpigment: | " | = 0,1 - 0,18 µm; | " | = 3,0:1 - 4,0:1 |
| Pigment: | " | = 0,14 - 0,25 µm; | " | = 2,5:1 - 3,9:1 |

9. Verwendung des nach mindestens einem der Ansprüche 1 bis 8 definierten Verfahren hergestellten N,N'-Dimethylperylen-3,4,9,10-tetracarbonsäurediimids zum Pigmentieren von Automobillacken des Typs der Alkyd-Melamin-Harz- oder Acryl-Melamin-Harz-Einbrennlacke oder des Typs der Zweikomponentenlacke auf Basis polyisocyanatvernetzbarer Acrylharze.

## Claims

1. A process for the preparation of N,N'-dimethylperylene-3,4,9,10-tetracarboxylic diimide in high-hiding pigment form using the reaction of perylene-3,4,9,10-tetracarboxylic dianhydride with methylamine, wherein at least 3 mol of methylamine are used in at least 5 times the amount by weight of water, based on the weight of the dianhydride, per mol of perylene-3,4,9,10-tetracarboxylic dianhydride, the reaction is carried out at a temperature of 40 to 200°C and the excess methylamine is distilled off only after the perylene-3,4,9,10-tetracarboxylic dianhydride used has been fully converted to the methylammonium salts of the corresponding N,N'-dimethyldicarbamoylperylenedicarboxylic acids, the temperature being held for a time at 140 to 200°C after or, if required, even during the formation of the N,N'-dimethylperylene-3,4,9,10-tetracarboxylic diimide in order to produce a highly crystalline form of the pigment, the resultant highly crystalline crude pigment in agueous suspension, which has a mean particle size D_{50%} (mass distribution) of 0.15 to 0.4 µm and a mean length-to-width ratio q_{50%} (mass distribution) of the pigment particles of 10:1 to 3:1, is subsequently ground in aqueous suspension, after intermediate isolation or without intermediate isolation, until the mean particle size is 0.1 to 0.2 µm and the mean length-to-width ratio of the pigment particles is less than 5:1, and the resultant pre-pigment is heat-treated in aqueous suspension or, after the addition of an organic solvent, in an aqueous-organic medium until the pigment has a mean particle size of 0.125 to 0.4 µm and a mean length-to-width ratio of the pigment particles of 4:1 or less.

2. The process as claimed in claim 1, wherein 3 - 8 mol of methylamine are used per mol of perylene-3,4,9,10-tetracarboxylic dianhydride.

3. The process as claimed in claim 1 or 2, wherein the methylamine is used with at most 15 times, preferably with 8 to 12 times the amount by weight of water, based on the weight of the perylene-3,4,9,10-tetracarboxylic dianhydride.

4. The process as claimed in at least one of claims 1 to 3, wherein the overall reaction with the methylamine is carried out at 140 to 200°C, after which the excess methylamine is distilled off and the crude pigment in aqueous suspension is subjected to the subsequent grinding process without intermediate isolation.

5. The process as claimed in at least one of claims 1 to 3, wherein the reaction with the methylamine is carried out at the boiling temperature of the suspension under normal pressure with ring opening of the anhydride groups, the excess methylamine is then distilled off, the reaction mixture is then heated to a temperature of 140 to 200°C and the crystallization of the crude pigment and if appropriate the completion of the second stage of the reaction (diimide formation) is carried out at this temperature and the pigment in aqueous suspension is supplied to the grinding process without intermediate isolation.

6. The process as claimed in at least one of claims 1 to 5, wherein at least one organic solvent selected from the group comprising halogenated aromatic and halogenated aliphatic hydrocarbons and also alkylbenzenes and alkylnaphthalenes is added to the pre-pigment after the grinding process and the pre-pigment is then heat-treated in an aqueous-organic medium at a temperature of 50 to 200°C for 1 to 15 hours.

7. The process as claimed in claim 6, wherein one or more organic solvents selected from the group comprising alkylbenzenes and alkylnaphthalenes with 1 to 3 C₁-C₄-alkyl chains are used.

8. The process as claimed in at least one of claims 1 to 7, wherein the crude pigment, the pre-pigment and the finished pigment have the following parameters:
| | | | | |
|---|---|---|---|---|
| crude pigment: | D_{50%} | = 0.16 - 0.36 µm; | q_{50%} | = 7:1 - 3.5:1 |
| pre-pigment : | " | = 0.1 - 0.18 µm; | " | = 3.0:1 - 4.0:1 |
| pigment : | " | = 0.14 - 0.25 µm; | " | = 2.5:1 - 3.9:1 |

9. The use of the N,N'-dimethylperylene-3,4,9,10-tetracarboxylic diimide prepared by the process defined according to at least one of claims 1 to 8 for pigmenting automotive finishes of the type of the alkyd-melamine resin or acrylic-melamine resin baking finishes or of the type of the two-pack finishes based on polyisocyanate-crosslinkable acrylic resins.

## Revendications

1. Procédé pour préparer du N,N'-diméthyl-pérylène-3,4,9,10-tétracarboxodiimide sous forme pigmentaire à fort pouvoir couvrant, par utilisation de la réaction du dianhydride pérylène-3,4,9,10-tétracarboxylique avec la méthylamine, caractérisé en ce qu'on utilise par mole de dianhydride pérylène-3,4,9,10-tétracarboxylique une quantité au moins 3 fois molaire de méthylamine, dans une quantité d'eau égale à au moins 5 fois la masse du dianhydride, on met en oeuvre la réaction à une température de 40 à 200°C et on chasse par distillation la méthylamine en excès, le plus vite possible après la fin de la réaction du dianhdyride pérylène-3,4,9,10-tétracarboxylique utilisé, pour obtenir les sels de méthylammonium des acides N,N'-diméthyl-dicarbamoylpérylène-dicarboxylique correspondants, la température étant ajustée à une valeur de 140 à 200°C pendant un certain temps, après et éventuellement dès la formation du N,N'-diméthyl-pérylène-3,4,9,10-tétracarboxodiimide pour permettre la formation d'une forme pigmentaire à forte cristallinité, puis le pigment brut à forte cristallinité ainsi obtenu, mis en suspension dans l'eau, et qui a une granulométrie moyenne D_{50 %} (répartition en masse) de 0,15 à 0,4 µm et un rapport moyen q_{50 %} (répartition en masse) de la longueur à la largeur des particules pigmentaire de 10:1 à 3:1, est broyé, après isolement intermédiaire ou sans isolement intermédiaire, en solution aqueuse, jusqu'à ce que la granulométrie moyenne soit de 0,1 à 0,2 µm et que le rapport moyen de la longueur à la largeur des particules pigmentaires soit inférieure à 5:1, et on fait subir un traitement thermique au pré-pigment obtenu, en suspension aqueuse ou après addition d'un solvant organique dans un milieu aqueux organique, jusqu'à ce que le pigment ait une granulométrie moyenne de 0,125 à 0,4 µm et un rapport moyen de la longueur à la largeur des particules pigmentaires de 4:1 ou moins.

2. Procédé selon la revendication 1, caractérisé en ce qu'on utilise par mole de dianhydride pérylène-3,4,9,10-tétracarboxylique une quantité de méthylamine 3-8 molaire.

3. Procédé selon les revendications 1 ou 2, caractérisé en ce qu'on utilise la méthylamine avec une quantité d'eau au plus 14 fois, de préférence 8-12 fois égale à la masse du dianhydride pérylène-3,4,9,10-tétracarboxylique.

4. Procédé selon au moins l'une des revendications 1 à 3, caractérisé en ce qu'on met en oeuvre la totalité de la réaction avec la méthylamine à une température de 140 à 200°C, puis on chasse par distillation la méthylamine en excès et on envoie à l'opération suivante de broyage le pigment brut, en suspension dans l'eau, sans isolement intermédiaire.

5. Procédé selon au moins l'une des revendications 1 à 3, caractérisé en ce qu'on met en oeuvre la réaction avec la méthylamine par décyclisation des groupes anhydrides à la température d'ébullition de la suspension sous la pression normale, puis on chasse par distillation la méthylamine en excès, on chauffe à une température de 140 à 200°C, on met en oeuvre la cristallisation du pigment brut et éventuellement on parachève la deuxième étape de la réaction (formation du diimide), et on envoie à l'opération de broyage, sans isolement intermédiaire, le pigment en suspension aqueuse.

6. Procédé selon au moins l'une des revendications 1 à 5, caractérisé en ce que le pré-pigment, après l'opération de broyage, après addition d'au moins un solvant organique choisi parmi l'ensemble comprenant les hydrocarbures aromatiques halogénés et les hydrocarbures aliphatiques halogénés, ainsi que les alkylbenzènes et les alkylnaphtalènes, est soumis à un traitement thermique dans un milieu aqueux organique à une température de 50 à 200°C pendant 1 à 15 heures.

7. Procédé selon la revendication 6, caractérisé en ce qu'on utilise un ou plusieurs solvants organiques choisis parmi l'ensemble comprenant les alkylbenzènes et les alkylnaphtalènes ayant de 1 à 3 chaînes alkyle en C₁-C₄.

8. Procédé selon au moins l'une des revendications 1 à 7, caractérisé en ce que le pigment brut, le pré-pigment et le pigment fini présentent les paramètres suivants :
| | D_{50 %} | q_{50 %} |
|---|---|---|
| Pigment brut : | 0,16 - 0,36 µm | 7:1 - 3,5:1 |
| Pré-pigment : | 0,1 - 0,18 µm | 3,0:1 - 4,0:1 |
| Pigment : | 0,14 - 0,25 µm | 2,5:1 - 3,9:1 |

9. Utilisation du N,N'-diméthylpérylène-3,4,9,10-tétracarboxodiimide préparé par un procédé défini au moins dans l'une des revendications 1 à 8, pour pigmenter des vernis pour automobile du type vernis au four à base de résine d'alkyde-mélamine ou acrylique-mélamine, ou encore du type des vernis à deux composants à base de résines acryliques réticulables par les polyisocyanates.
